# EUROPÄISCHE PATENTSCHRIFT

(11) **EP 2 966 329 B1**
(45) Veröffentlichungstag und Bekanntmachung des Hinweises auf die Patenterteilung: **17.04.2019**
(21) Anmeldenummer: 15175672.3
(22) Anmeldetag: 07.07.2015
(51) Int. Cl.: F16K 27/02, F02B 37/16, H01F 7/128, H01F 7/16, H01F 7/08

(54) **ELEKTROMAGNETVENTIL FÜR DEN KFZ-BEREICH**
SOLENOID VALVE FOR THE AUTOMOTIVE FIELD
SOUPAPE À ÉLECTRO-AIMANT POUR LE SECTEUR AUTOMOBILE

(30) Priorität: 09.07.2014 DE 102014109575
(43) Veröffentlichungstag der Anmeldung: 13.01.2016
(73) Patentinhaber: Pierburg GmbH, 41460 Neuss (DE)
(72) Erfinder: Alvito, Fernandes, 51377 Leverkusen (DE); Zurke, Janusz, 47638 Straelen (DE); Schnelker, Franz-Josef, 41470 Neuss (DE)
(74) Vertreter: Patentanwälte ter Smitten Eberlein-Van Hoof Rütten Partnerschaftsgesellschaft mbB

(56) Entgegenhaltungen:
- DE-A1-102004 030 976
- DE-A1-102008 030 454
- DE-A1-102010 042 845
- DE-A1-102012 205 503
- JP-A- 2008 039 157
- US-A1- 2005 269 538

## Beschreibung

Die Erfindung betrifft ein Elektromagnetventil für den Kfz-Bereich mit einem Gehäuse, in dem ein elektromagnetischer Kreis vorgesehen ist, der aus einer auf einen Spulenträger gewickelten Spule, einem Anker, einem Kern und einer Rückschlusseinrichtung aufgebaut ist, wobei der Anker und der Kern in einem Ventilinnenraum angeordnet sind, wobei sich dem Anker eine Ventilstange anschließt, die im Kern beweglich gelagert ist, derart dass der Anker über Lagermittel beweglich gelagert ist und indirekt mit einem Ventilverschlusskörper in Wirkverbindung steht, wobei ein Hülsenkörper zur Abdichtung des Ventilinnenraumes vorgesehen ist und wobei Federmittel zur Vorspannung des Ankers vorgesehen sind, wobei der Hülsenkörper aus einem magnetisch leitenden Werkstoff hergestellt ist.

Derartige Elektromagnetventile sind aus dem Stand der Technik hinlänglich bekannt. Sie werden beispielsweise als Schubumluftventile, Kühlmittelschaltventile, Ölventile oder aber auch als Ölmodulatoren eingesetzt. Um den elektromagnetischen Kreis wirkungsvoll gegen das zu steuernde oder regelnde Fluid abzudichten, ist es bekannt, den Ventilinnenraum mittels eines Hülsenkörpers gegenüber dem Spulenträger abzudichten. Ein Beispiel für ein derartiges Elektromagnetventil findet sich in der DE 10 2008 030 454 A1 Hierbei ist der Hülsenkörper als Führungshülse ausgelegt, die den Anker in Axialrichtung beweglich lagert. Ein Nachteil dieser Art von Elektromagnetventilen ist jedoch, dass im Vergleich zu Elektromagnetventilen ohne Hülsenkörper bei gleicher Auslegung die Elektromagnetventile mit Hülsenkörper einen Kraftverlust in der Wirkung des elektromagnetischen Kreises aufweisen. Weitere Beispiele für Elektromagnetventile sind in der DE 44 29 211 A1, der DE 10 2012 205 503 A1 und der DE 10 2004 030 976 A1 zu finden.

Aufgabe der Erfindung ist es daher, auf einfache und kostengünstige Weise ein Elektromagnetventil der gattungsgemäßen Art bereitzustellen, das den oben genannten Nachteil vermeidet.

Diese Aufgabe wird dadurch gelöst, dass der Hülsenkörper aus einem magnetisch leitenden Werkstoff hergestellt ist, wobei ein definierter Abstand d zumindest zwischen einer Umfangsfläche des Ankers und dem Hülsenkörper vorgesehen ist, wobei der Abstand d zwischen dem Anker und dem Hülsenkörper als Luftspalt ausgeführt ist, derart, dass ein Luftabstand zwischen einer Umfangsfläche des Ankers und dem Hülsenkörper vorgesehen ist, damit es nicht zu einem magnetischen Verkleben des Ankers kommt. Durch eine derartige konstruktive Ausgestaltung ist der Hülsenkörper nun Teil des magnetischen Kreises, wodurch ein Kraftabfall oder eine große Hysterese vermieden werden kann. Aufgrund des definierten Abstandes zwischen Anker und Hülsenkörper ist die Funktion des Elektromagnets gewährleistet.

Der Kern ist in dieser Ausführungsform also zwischen dem Anker und dem Ventilverschlusskörper angeordnet. Hierbei kann die Ventilstange über eine Gleitbuchse im Kern gelagert sein. Sie kann alternativ jedoch auch direkt im Kern geführt sein. In einer besonders vorteilhaften Ausführungsform ist die Ventilstange einstellbar im Anker gelagert, wodurch nach Montage eine Feinjustierung des Elektromagnetventils ermöglicht wird.

Es ist jedoch auch möglich, dass der Anker im Wesentlichen hohl ausgeführt und mit seiner nach innen gerichteten Fläche beweglich auf einem Führungsstift gelagert ist, derart, dass der Abstand zwischen dem Anker und dem Hülsenkörper als Luftspalt ausgeführt ist.

In vorteilhafter Weise kann der Abstand zwischen dem Anker und dem Hülsenkörper zwischen 5µm und 0,5mm betragen.

Eine Einstellbarkeit des Elektromagnetventils nach Montage kann auch dann gegeben sein, wenn der Kern einstellbar im Hülsenkörper angeordnet ist.

Nachfolgend wird die Erfindung anhand einer Zeichnung näher erläutert, hierbei zeigt:
Figur 1 eine Schnittansicht einer ersten Ausführungsform des erfindungsgemäßen Elektromagnetventils, und
Figur 2 eine Schnittansicht eines nicht erfindungsgemäßen Elektromagnetventils.

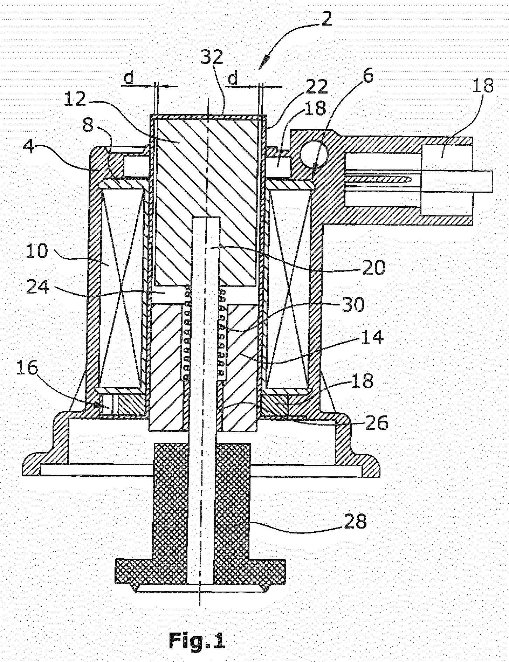

Figur 1 zeigt eine Schnittansicht eines Ausführungsbeispiels des erfindungsgemäßen Elektromagnetventils 2. Derartige Elektromagnetventile werden im Kfz-Bereich und hierbei insbesondere als Schubumluftventile, Kühlmittelschaltventile, Ölventile, Ölmodulatoren, etc., eingesetzt. Sie weisen ein Gehäuse 4 auf, in dem ein elektromagnetischer Kreis 6 vorgesehen ist, der im Wesentlichen aus einer auf einem Spulenträger 8 gewickelten Spule 10, einem Anker 12, einem Kern 14 und einer Rückschlusseinrichtung 16 besteht. Die Spule 10 kann hierbei auf bekannte Weise über einen Elektrostecker 17 mit einer nicht weiter dargestellten Motorsteuerung verbunden sein. Die Rückschlusseinrichtung 16 besteht auf bekannte Weise aus einem Rückschlussblech 18 und einem in dieser Ansicht nicht dargestellten Joch.

Dem Anker 12 schließt sich eine Ventilstange 20 an, die im vorliegenden Ausführungsbeispiel einstellbar im Anker 12 befestigt ist. Die Einstellbarkeit kann hierbei durch eine Rändelung oder auch eine andere kraftschlüssige Verbindung gewährleistet sein. Des Weiteren ist ein Hülsenkörper 22, der einen Ventilinnenraum 24 gegenüber dem elektromagnetischen Kreis 6 abdichtet, damit keine Verschmutzungen des zu regelnden oder zu steuernden Fluids eine Beschädigung des elektromagentischen Kreises 6 verursachen können. Im Hülsenkörper 22 ist der Kern 14 angeordnet, der im vorliegenden Ausführungsbeispiel eine Gleitbuchse 26 zur Lagerung der Ventilstange 20 aufweist. Zur Feinjustierung ist es auch denkbar, dass der Kern 14 derartig im Hülsenkörper 22 angeordnet ist, dass eine Einstellung nach Endmontage möglich ist. An dem dem Anker 12 gegenüber gelegenen Ende der Ventilstange 20 ist auf bekannte Weise ein Ventilverschlusskörper 28 vorgesehen. Desweiteren ist der Anker 12 auf bekannte Weise durch ein Federorgan 30 gegenüber dem Kern 14 in einer Funktionsstellung, die in den meisten Fällen als Fail-Safe-Stellung dient vorgespannt.

Erfindungsgemäß ist nun vorgesehen, dass der Hülsenkörper 22 aus einem magnetischen Material gefertigt ist. Hierdurch ist eine Umfangsfläche des Hülsenkörpers 22 ebenfalls Teil des elektromagnetischen Kreises 6. Um eine sichere Funktion des Elektromagnetventils 2 zu gewährleisten, ist des Weiteren ein Abstand d, im vorliegenden Fall ein Luftabstand von 0,15µm, zwischen einer Umfangsfläche des Ankers 12 und dem Hülsenkörper 22 vorgesehen, damit es nicht zu einem magnetischen Verkleben des Ankers 12 kommt. Ein Abstand zwischen einer Grundfläche 32 des Hülsenkörpers 22 und dem Anker 12 ist im vorliegenden Fall nicht vorzusehen, da die Grundfläche 32 nicht Teil des elektromagnetischen Kreises 6 ist. Sollte die Grundfläche 32 jedoch im Bereich des oberen Teils des Rückschlussbleches 18 oder darunter angeordnet sein, wäre auch zwischen der Grundfläche 32 und dem Anker 12 ein Abstand d vorzusehen. Es ist jedoch auch denkbar, dass die Innenumfangsfläche des Hülsenkörpers 22 eine nicht-magnetische Beschichtung aufweist, die den Abstand d ausbildet, wodurch der Anker 12 auch im Hülsenkörper 22 geführt sein könnte.

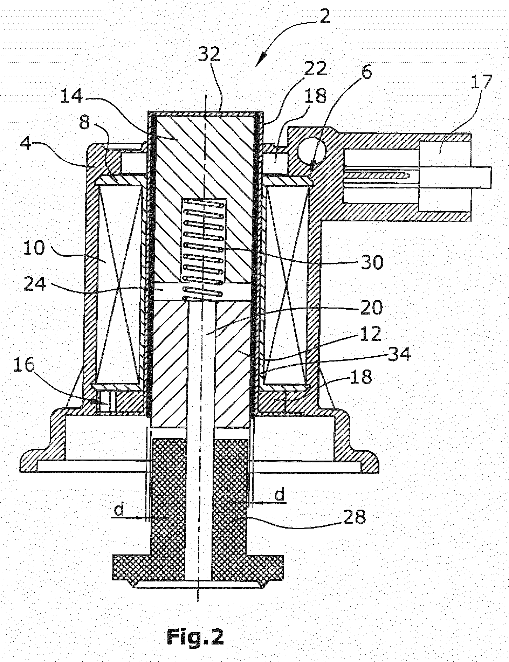

Figur 2 zeigt eine Ausführungsform eines aus dem Stand der Technik bekannten Elektromagnetventils 2. Im Wesentlichen unterscheidet sich diese Ausführungsform von der aus Figur 1 dadurch, dass der Anker 12 nun zwischen dem Kern 14 und dem Ventilverschlusskörper 28 angeordnet und in dem Hülsenkörper 22 axial geführt ist. Der Abstand zwischen dem Anker 12 und dem Hülsenkörper 22 wird hierzu durch eine nicht-magnetische Beschichtung 34 ausgebildet. Es ist jedoch auch denkbar, dass auf bekannte Weise im Kern ein Führungsstift vorgesehen ist, auf dem ein hohl ausgebildeter Anker entsprechend geführt ist.

## Patentansprüche

1. Elektromagnetventil für den Kfz-Bereich mit einem Gehäuse (4), in dem ein elektromagnetischer Kreis (6) vorgesehen ist, der aus einer auf einen Spulenträger (8) gewickelten Spule (10), einem Anker (12), einem Kern (14) und einer Rückschlusseinrichtung (16) aufgebaut ist, wobei der Anker (12) und der Kern (14) in einem Ventilinnenraum (24) angeordnet sind, wobei sich dem Anker (12) eine Ventilstange (20) anschließt, die im Kern (14) beweglich gelagert ist, derart dass der Anker (12) über Lagermittel (26) beweglich gelagert ist und indirekt mit einem Ventilverschlusskörper (28) in Wirkverbindung steht, wobei ein Hülsenkörper (22) zur Abdichtung des Ventilinnenraumes (24) vorgesehen ist und wobei Federmittel (30) zur Vorspannung des Ankers (12) vorgesehen sind, wobei der Hülsenkörper (22) aus einem magnetisch leitenden Werkstoff hergestellt ist, **dadurch gekennzeichnet, dass** ein definierter Abstand d zumindest zwischen einer Umfangsfläche des Ankers (12) und dem Hülsenkörper (22) vorgesehen ist, wobei der Abstand d zwischen dem Anker (12) und dem Hülsenkörper (22) als Luftspalt ausgeführt ist, derart, dass ein Luftabstand zwischen einer Umfangsfläche des Ankers (12) und dem Hülsenkörper (22) vorgesehen ist, damit es nicht zu einem magnetischen Verkleben des Ankers (12) kommt.

2. Elektromagnetventil nach Anspruch 1, **dadurch gekennzeichnet, dass** die Ventilstange (20) über eine Gleitbuchse (26) im Kern (14) angeordnet ist.

3. Elektromagnetventil nach -Anspruch 1 oder 2, **dadurch gekennzeichnet, dass** die Ventilstange (20) einstellbar im Anker (12) gelagert ist.

4. Elektromagnetventil nach einem der vorhergehenden Ansprüche, **dadurch gekennzeichnet, dass** der Anker (12) im Wesentlichen hohl ausgeführt ist und mit seiner nach innen gerichteten Fläche beweglich auf einem Führungsstift gelagert ist, derart, dass der Abstand d zwischen dem Anker (12) und dem Hülsenkörper (22) als Luftspalt ausgeführt ist.

5. Elektromagnetventil nach einem der vorhergehenden Ansprüche, **dadurch gekennzeichnet, dass** der Abstand d zwischen dem Anker (12) und dem Hülsenkörper (22) zwischen 5µm und 0,5mm beträgt.

6. Elektromagnetventil nach einem der vorhergehenden Ansprüche, **dadurch gekennzeichnet, dass** der Kern (14) einstellbar im Hülsenkörper (22) angeordnet ist.

## Claims

1. Solenoid valve for the automotive field comprising a housing (4) in which an electromagnetic circuit (6) is provided which is formed by a coil (10) wound on a coil carrier (8), an armature (12), ca core (14) and a magnetic reflux means (16), wherein the armature (12) and the core (14) are arranged in a valve interior space (24), wherein the armature (12) is adjoined by a valve rod (20) movably supported in the core (14), such that the armature (12) is movably supported by bearing means (26) and is in indirect operative connection with a valve closure body (28), wherein a sleeve body (22) is provided for sealing the valve interior space (24) and wherein spring means (30) are provided for pre-tensioning the armature (12), wherein the sleeve body (22) is made from a magnetically conductive material, **characterized in that** a defined distance d is provided at least between a circumferential surface of the armature (12) and the sleeve body (22), wherein the distance d between the armature (12) and the sleeve body (22) is designed as an air gap, such that an air distance is provided between a circumferential surface of the armature 12 and the sleeve body (22) so as to suppress a magnetic bonding of the armature (12).

2. Solenoid valve of claim 1, **characterized in that** the valve rod (20) is arranged in the core (14) via a slide bushing (26).

3. Solenoid valve of claim 1 or 2, **characterized in that** the valve rod (20) is adjustably supported in the armature (12).

4. Solenoid valve of one of the preceding claims, **characterized in that** the armature (12) is substantially hollow and is movably supported on a guide pin by its inward directed surface, such that the distance d between the armature (12) and the sleeve body (22) is realized as an air gap.

5. Solenoid valve of one of the preceding claims, **characterized in that** the distance d between the armature (12) and the sleeve body (12) is between 5µm and 0.5 mm.

6. Solenoid valve of one of the preceding claims, **characterized in that** the core (14) is adjustably arranged in the sleeve body (22).

## Revendications

1. Soupape électro-aimant pour le secteur automobile avec un carter (4) dans lequel un circuit (6) électromagnétique est prévu, qui est formé par une bobine (10) enroulée sur un porte-bobine (8), une armature (12), un noyau (14) et un moyen de reflux magnétique (16), l'armature (12) et le noyau (14) étant disposés dans un espace (24) intérieur de la soupape, l'armature (12) étant adjoint par une tige de soupape (20) supportée de manière déplaçable dans le noyau (14), de sorte que l'armature (12) étant disposé de manière déplaçable par des moyens de support (26) et étant indirectement en liaison active avec un corps de fermeture de soupape (28), un corps de manchon (22) étant prévu pour étanchéifier l'espace (24) intérieur de la soupape, et des moyens ressort (30) étant prévus pour solliciter l'armature (12), le corps de manchon (22) étant fabriqué d'une matière magnétiquement conductrice, **caractérisée en ce qu'**une distance d définie est prévue au moins entre une surface circonférentielle de l'armature (12) et le corps de manchon (22), la distance d entre l'armature (12) et le corps de manchon (22) étant en forme d'un entrefer, de sorte qu'une distance d'air est prévue entre une surface circonférentielle de l'armature (12) et le corps de manchon (22) pour éviter une adhésion magnétique.

2. Soupape électro-aimant selon la revendication 1, **caractérisée en ce que** la tige de soupape (20) est disposée dans le noyau (14) par un manchon de glissement (26).

3. Soupape électro-aimant selon la revendication 1 ou 2, **caractérisée en ce que** la tige de soupape (20) est supportée de manière ajustable dans l'armature (12).

4. Soupape électro-aimant selon l'une quelconque des revendications précédentes, **caractérisée en ce que** l'armature (12) est sensiblement creux et, par sa surface intérieure, est supporté de manière déplaçable sur une broche de guidage, de sorte que la distance d entre l'armature (12) et le corps de manchon (22) est en forme d'un entrefer.

5. Soupape électro-aimant selon l'une quelconque des revendications précédentes, **caractérisée en ce que** la distance d enter l'armature (12) et le corps de manchon (22) est entre 5µm et 0,5mm.

6. Soupape électro-aimant selon l'une quelconque des revendications précédentes, **caractérisée en ce que** le noyau (14) est disposé de manière ajustable dans le corps de manchon (22).
